# EUROPÄISCHE PATENTSCHRIFT

(11) **EP 2 683 238 B1**
(45) Veröffentlichungstag und Bekanntmachung des Hinweises auf die Patenterteilung: **09.12.2015**
(21) Anmeldenummer: 12708248.5
(22) Anmeldetag: 08.03.2012
(51) Int. Cl.: A01N 25/02, A01N 25/04, A01N 25/10, A01N 37/26, A01N 39/04, A01N 43/653, A01N 53/00, A01N 57/16, C08L 67/00, C08G 63/127

(54) **ZUSAMMENSETZUNGEN ENTHALTEND COPOLYMERE**
COMPOSITION COMPRISING COPOLYMERS
COMPOSITIONS COMPRENANT DES COPOLYMÈRES

(30) Priorität: 10.03.2011 DE 102011013556
(43) Veröffentlichungstag der Anmeldung: 15.01.2014
(73) Patentinhaber: CLARIANT INTERNATIONAL LTD, 4132 Muttenz (CH)
(72) Erfinder: WACKER, Andreas, 68163 Mannheim (DE)
(74) Vertreter: Mikulecky, Klaus
(86) Internationale Anmeldenummer: PCT/EP2012/001027
(87) Internationale Veröffentlichungsnummer: WO 2012/119772

(56) Entgegenhaltungen:
- WO-A1-02/089575
- DE-C- 547 517
- US-A- 2 072 068
- US-A- 2 308 498
- US-A- 4 081 416

## Beschreibung

Die Erfindung betrifft Zusammensetzungen von Copolymeren in nicht mit Wasser mischbaren Lösemitteln, wobei die Zusammensetzungen kein Wasser oder Wasser in einer Menge kleiner oder gleich 1,0 Gew.-% enthalten. Die Copolymere enthalten Struktureinheiten, hervorgegangen aus Glycerin, Phthalsäure und Cocosfettsäure in bestimmten Mengenverhältnissen.

Copolymere erhältlich durch Copolymerisation von Glycerin, mindestens einer Dicarbonsäure und mindestens einer Monocarbonsäure sind aus EP 1 379 129 und US 2009/156407 bekannt. Bei den Copolymeren handelt es sich in reinem Zustand um sehr hochviskose, honig- bis wachsartige Substanzen, die in unverdünnter Form schwer zu handhaben sind. Daher wird die Verwendung der Copolymere als 75 bis 90 Gew.-%ige wässrige Lösung empfohlen. Tatsächlich werden die Copolymere auch in Form von wässrigen Zubereitungen vermarktet (beispielsweise unter dem Handelsnamen Synergen^{®} GL 5 der Firma Clariant) und finden als Formulierungshilfsmittel in wässrigen Pestizidzubereitungen, vor allem in Glyphosatzubereitungen, Verwendung. EP 1 379 129 lehrt darüber hinaus, dass sich die Eigenschaften der Copolymere über den Vernetzungsgrad, d.h. über den Anteil der Dicarbonsäure, beeinflussen lassen.

GB 903 766 beschreibt 3,4-Dichloropropionanilide als Herbizid und Formulierungen dieses Wirkstoffes. Dabei wird auch auf die generelle Verwendbarkeit von nicht-ionischen Kondensaten aus Polyglycerinen, Fettsäuren und Phthalsäure in selbst-emulgierbaren Zubereitungen hingewiesen. Konkrete Beispiele werden nicht erwähnt und auch auf die Zusammensetzung dieser Kondensate wird nicht eingegangen.

EP 161 595 beschreibt ein Haarnachbehandlungsmittel in Form einer wässrigen Emulsion, die Komplexester bestehend aus aliphatischen Poylolen, Dicarbonsäuren und aliphatischen Monocarbonsäuren enthält.

DE 10 2009 041 003.1 beschreibt wässrige Pestizidzubereitungen enthaltend Copolymere erhältlich durch Copolymerisation von Glycerin, mindestens einer Dicarbonsäure und mindestens einer Monocarbonsäure sowie eine oder mehrere amphotere oberflächenaktive Substanzen.

Die Begriffe "wasserfreie" oder "nicht-wässrige" Zusammensetzungen oder Formulierungen bedeuten im Rahmen der vorliegenden Erfindung Zusammensetzungen oder Formulierungen, die entweder kein Wasser enthalten oder Wasser in einer Menge kleiner oder gleich 1,0 Gew.-% enthalten, bezogen auf das Gesamtgewicht der jeweiligen Zusammensetzung oder Formulierung.

Pestizidzubereitungen lassen sich grundsätzlich in flüssige und feste Typen (Formulierungen) unterteilen. Feste Formulierungen haben gegenüber den flüssigen den Nachteil, dass sie schwerer zu dosieren und homogen in der Spritzbrühe zu verteilen sind. Sie sind außerdem in der Regel weniger wirksam, da es sehr schwierig ist, in feste Zubereitungen ein Adjuvant einzuformulieren.

Flüssige Formulierungen können grundsätzlich in wässrige und nicht-wässrige Typen unterteilt werden. Nicht-wässrige Formulierungen enthalten ein oder mehrere (meist nicht mit Wasser mischbare) Lösemittel und sind wasserfrei. Trotz des allgemeinen Trends, unter Umweltschutzgesichtspunkten bevorzugt wässrige Formulierungen einzusetzen, spielen nicht-wässrige Pestizidzubereitungen nach wie vor eine große Rolle. Die meisten Wirkstoffe weisen in einem Lösemittel eine deutlich höhere Löslichkeit als in Wasser auf. Nicht-wässrige Formulierungen sind oftmals biologisch wirksamer, lagerstabiler oder hydrolyseempfindliche Wirkstoffe können überhaupt nur wasserfrei formuliert werden.

Als Formulierungshilfsmittel in nicht-wässrigen Pestizidzubereitungen werden sehr häufig Ethoxylierungsprodukte oder Alkoxylierungesprodukte von langkettigen Alkoholen oder Phenolen eingesetzt (Alkoholalkoxylate), die als Emulgator, Netzmittel oder Adjuvant fungieren. Sie haben jedoch den Nachteil, dass sie auf Ethylenoxid sowie Propylenoxid basieren, die wiederum aus Ethen und Propen und damit petrochemischen Rohstoffen hergestellt werden. Im Zuge der zunehmenden Verknappung und Verteuerung von Rohöl und dessen Folgeprodukten sowie einem wachsenden Umweltbewusstsein besteht ein wachsender Bedarf an Formulierungshilfsmitteln, die eine natürliche Rohstoffbasis nutzen.

Es besteht daher ein Bedarf an neuartigen Formulierungshilfsmitteln, die die oben genannten Nachteile nicht aufweisen und die in nicht-wässrigen Pestizidzubereitungen eingesetzt werden können.

Aufgabe der vorliegenden Erfindung war es daher, Zusammensetzungen zur Verfügung zu stellen, die zum größten Teil auf nachwachsenden Rohstoffen basieren, anwenderfreundlich in der Handhabung sind und die zur Herstellung von nicht-wässrigen Pestizidzubereitungen verwendet werden können.

Es wurde nun gefunden, dass diese Aufgabe durch nicht-wässrige Zusammensetzungen enthaltend A) ein oder mehrere bestimmte Copolymere, wobei die Copolymere eine oder mehrere Struktureinheiten hervorgegangen aus Glycerin, Phthalsäure und Cocosfettsäure enthalten, und B) ein oder mehrere nicht mit Wasser mischbare Lösemittel gelöst wird.

Gegenstand der Erfindung sind daher Zusammensetzungen enthaltend
A) ein oder mehrere Copolymere, wobei die Copolymere eine oder mehrere Struktureinheiten hervorgegangen aus
   a) 19,9 bis 75,9 Gew.-% Glycerin
   b) 0,1 bis 30 Gew.-% Phthalsäure und
   c) 24 bis 80 Gew.-% Cocosfettsäure
   enthalten und derart hergestellt werden, dass Monoglycerin zunächst zu einem Oligo- oder Polyglycerin kondensiert wird und erst danach mit der Phthalsäure und der Cocosfettsäure umgesetzt wird und
B) ein oder mehrere nicht mit Wasser mischbare Lösemittel,
dadurch gekennzeichnet, dass die Zusammensetzungen entweder kein Wasser enthalten oder Wasser in einer Menge kleiner oder gleich 1,0 Gew.-% enthalten, jeweils bezogen auf das Gesamtgewicht der Zusammensetzungen.

Die genannten Anteile der Monomere a), b) und c) (in Gew.-%) beziehen sich auf die Gesamtmenge der Monomere wie sie zur Herstellung der Copolymere eingesetzt wurden. Sie beziehen sich nicht auf die Endzusammensetzung der Copolymere, die durch Abspaltung von bei der Kondensation freiwerdendem Wasser geringfügig davon abweicht.

EP 1 379 129 offenbart explizit, dass sich die Eigenschaften der dort genannten Copolymere, wie auch die Wasserlöslichkeit, über den Vernetzungsgrad, d. h. über den Anteil der Dicarbonsäure, beeinflussen lassen. Überraschenderweise wurde nun jedoch festgestellt, dass der Anteil der Dicarbonsäure auf die Löslichkeit der Copolymere gemäß Komponente A) der erfindungsgemäßen Zusammensetzungen in nicht mit Wasser mischbaren Lösemitteln keinen Einfluss hat, sondern lediglich durch den Anteil der Monocarbonsäure bestimmt wird.

Die grundsätzlich möglichen Zusammensetzungen der Copolymere, sowie Herstellung und Ausführungsformen der Copolymerisation sind in EP 1 379 129 beschrieben. Allen gemein ist, dass die Kondensationsreaktionen zwischen Alkoholen und/oder Carbonsäuren ablaufen, d. h. die Monomere durch Etherbindungen (im Falle der Kondensation von zwei Alkohol-Funktionen des Glycerins) bzw. durch Esterbindungen (im Falle der Kondensation einer Alkohol-Funktion des Glycerins mit einer Carbonsäure-Funktion der Mono- oder Dicarbonsäure) miteinander verbunden sind.

Die Copolymere der Komponente A) der erfindungsgemäßen Zusammensetzungen werden derart hergestellt, dass Monoglycerin zunächst zu einem Oligo- oder Polyglycerin kondensiert wird und erst danach mit Phthalsäure b) und Cocosfettsäure c) umgesetzt wird. Dies bewirkt, dass die Copolymere der Komponente A) der erfindungsgemäßen Zusammensetzungen in dieser bevorzugten Ausführungsform der Erfindung kondensierte Oligo- oder Polyglycerin-Einheiten enthalten.

Vorzugsweise besteht das eine oder bestehen die mehreren in den erfindungsgemäßen Zusammensetzungen enthaltenen Copolymere der Komponente A) aus den Komponenten a), b) und c).

Der Großteil der Rohstoffe, die für die Herstellung der Copolymere benötigt werden, stammt aus nachwachsenden Rohstoffquellen. Beispielsweise ist Glycerin heutzutage ein Nebenprodukt der Biodieselherstellung.

Wie bereits erwähnt werden unter "wasserfreien" oder "nicht-wässrigen" Zusammensetzungen im Rahmen der vorliegenden Erfindung Zusammensetzungen verstanden, die entweder kein Wasser oder Wasser in einer Menge kleiner oder gleich 1,0 Gew.-% enthalten, bezogen auf das Gesamtgewicht der jeweiligen Zusammensetzung. Vorzugsweise enthalten die erfindungsgemäßen Zusammensetzungen weniger als 0,5 Gew.-% Wasser, bezogen auf das Gesamtgewicht der jeweiligen Zusammensetzung. Diese Wassergehalte resultieren üblicherweise aus Restmengen Wasser, das als Nebenprodukt bei der Kondensation der Copolymere entsteht, sind bereits in den verwendeten Lösemitteln enthalten oder werden im Zuge der Herstellung der Zusammensetzungen als Verunreinigung während des Prozesses mit eingebracht.

Die nicht mit Wasser mischbaren Lösemittel sind Lösemittel, die bei Raumtemperatur (25 °C) eine Löslichkeit von maximal 5 Gew.-% und bevorzugt von maximal 1 Gew.-% in Wasser aufweisen. Dabei können zweckmäßigerweise alle nicht mit Wasser mischbaren Lösemittel verwendet werden, wie sie auch üblicherweise in Pestizidzubereitungen eingesetzt werden.

Beispiele für solche Lösemittel sind Alkane, aromatische Kohlenwasserstoffe, Solvent Naphtha, Alkohole, Ester, Ketone, Amide, Ether, Phosphor- und Phosphonsäureester, pflanzliche Öle, Mineralöle, Alkylester von Fettsäuren pflanzlichen oder tierischen Ursprungs.

Bevorzugt handelt es sich um Solvent Naphtha, Fettsäureamide, pflanzliche Öle, Mineralöle sowie kurzkettige Ester von Fettsäuren pflanzlichen oder tierischen Ursprungs.

Besonders bevorzugte nicht mit Wasser mischbare Lösemittel im Sinne der vorliegenden Erfindung sind Solvent Naphtha, Fettsäuredimethylamide, pflanzliche Öle, Mineralöle oder Methylester von Fettsäuren pflanzlichen oder tierischen Ursprungs.

Die Lösemittel haben primär die Aufgabe, die an sich hochviskosen und schwer zu handhabenden Copolymere der Komponente A) der erfindungsgemäßen Zusammensetzungen in eine flüssige Darreichungsform mit ausreichend niedriger Viskosität zu überführen.

Der Anteil des einen oder der mehreren Copolymere der Komponente A) in den erfindungsgemäßen Zusammensetzungen beträgt vorzugsweise 1 bis 90 Gew.-%, besonders bevorzugt 10 bis 80 Gew.-% und insbesondere bevorzugt 20 bis 70 Gew.-% und der Anteil des einen oder der mehreren nicht mit Wasser mischbaren Lösemittel der Komponente B) beträgt vorzugsweise 10 bis 99 Gew.-%, besonders bevorzugt 20 bis 90 Gew.-% und insbesondere bevorzugt 30 bis 80 Gew.-%. Diese Mengenangaben sind auf das Gesamtgewicht der erfindungsgemäßen Zusammensetzungen bezogen.

Neben Copolymer und Lösemittel können die erfindungsgemäßen Zusammensetzungen weitere Zusatzstoffe enthalten, die verschiedene Funktionen übernehmen können. Beispiele für Hilfsstoffe nach ihrer Funktion sind zusätzliche Lösemittel, Emulgatoren, Adjuvants, Netzmittel, Penetrationsförderer, Kältestabilisatoren, Farbmittel, Entschäumer, Antioxidantien, Frostschutzmittel.

Die erfindungsgemäßen Zusammensetzungen können zur Herstellung von wasserfreien Pestizidzubereitungen verwendet werden. Hierbei resultieren erfindungsgemäße Zusammensetzungen, die ein oder mehrere Pestizide enthalten.

In einer bevorzugten Ausführungsform der Erfindung enthalten die erfindungsgemäßen Zusammensetzungen daher zusätzlich ein oder mehrere Pestizide. Derartige erfindungsgemäße Zusammensetzungen werden im Folgenden auch als "erfindungsgemäße Pestizid-Zusammensetzungen" bezeichnet.

Bevorzugte erfindungsgemäße Pestizid-Zusammensetzungen sind Emulsionskonzentrate (ECs) und Öldispersionen (ODs).

In einem Emulsionskonzentrat liegt das eine oder die mehreren Pestizide in gelöster Form in einem Lösemittel vor. In einer Öldispersion liegt das eine oder die mehreren Pestizide in dispergierter Form in einem Lösemittel (dem Öl) vor. Bei dem "Öl" kann es sich auch durchaus um kein Öl im klassischen Sinne (wie ein Mineralöl oder Pflanzenöl handeln). Vielmehr wird darunter jedes nicht mit Wasser mischbare Lösemittel verstanden.

Unter "Pestiziden" werden im Rahmen der vorliegenden Erfindung Herbizide, Fungizide, Insektizide, Akarizide, Bakterizide, Molluskide, Nematizide und Rodentizide sowie Phytohormone verstanden. Phytohormone steuern physiologische Reaktionen, wie Wachstum, Blührhythmus, Zellteilung und Samenreifung. Eine Übersicht der relevantesten Pestizide findet sich beispielsweise in "The Pesticide Manual" des British Crop Protection Council, 14th Edition 2006, Editor: C D S Tomlin.

Die Pestizide der erfindungsgemäßen Zusammensetzungen werden vorzugsweise ausgewählt aus der Gruppe bestehend aus Herbiziden, Insektiziden und Fungiziden.

Bevorzugte Fungizide sind aliphatische Stickstofffungizide, Amidfungizide wie Acylaminosäurefungizide oder Anilidfungizide oder Benzamidfungizide oder Strobilurinfungizide, aromatische Fungizide, Benzimidazolfungizide, Benzothiazolfungizide, Carbamatfungizide, Conazolfungizide wie Imidazole oder Triazole, Dicarboximidfungizide, Dithiocarbamatfungizide, Imidazolfungizide, Morpholinfungizide, Oxazolfungizide, Pyrazolfungizide, Pyridinfungizide, Pyrimidinfungizide, Pyrrolfungizide, Chinonfungizide.

Bevorzugte Herbizide sind Amidherbizide, Anilidherbizide, aromatische Säureherbizide wie Benzoesäureherbizide oder Picolinisäureherbizide, Benzoylcyclohexanedionherbizide, Benzofuranylalkylsulfonatherbizide, Benzothiazolherbizide, Carbamatherbizide, Carbanilatherbizide, Cyclohexenoximherbizide, Cyclopropylisoxazolherbizide, Dicarboximidherbizide, Dinitroanilinherbizide, Dinitrophenolherbizide, Diphenyletherherbizide, Dithiocarbamatherbizide, Imidazolinonherbizide, Isoxazolidinonherbizide Nitrilherbizide, Organophosphorherbizide, Oxadiazolonherbizide, Oxazolherbizide, Phenoxyherbizide wie Phenoxyessigsäureherbizide oder Phenoxybutansäureherbizide oder Phenoxypropionsäureherbizide oder Aryloxyphenoxypropiosäureherbizide, Pyrazolherbizide wie Benzoylpyrazolherbizide oder Phenylpyrazolherbizide, Pyridazinonherbizide, Pyridinherbizide, Thiocarbamatherbizide, Triazinherbizide, Triazinonherbizide, Triazolherbizide, Triazolonherbizide, Triazolopyrimidinherbizide, Uracilherbizide, Ureaherbizide wie Phenylharnstoffherbizide oder Sulfonylharnstoffherbizide.

Bevorzugte Insektizide sind Carbamatinsektizide, wie Benzofuranylmethylcarbamat- Insektizide oder Dimethylcarbamat-Insektizide oder Oximcarbamat-Insektizide oder Phenylmethylcarbamatinsektizide, Diamidinsektizide, Insektenwachstumsregulatoren, Macrozyklische Lactoneinsektizide wie Avermectin-Insektizide oder Milbemycin-Insektizide oder Spinosyninsektizide, Nereistoxin analoge Insektizide, Nicotinoidinsektizide wie Nitroguanidinnicotinoid-Insektizide oder Pyridylmethylaminnicotinoid-Insektizide, Organophosphorinsektizide wie Organophosphatinsektizide oder Organothiophosphatinsektizide oder Phosphonatinsektizide oder Phosphoramidothioatinsektizide, Oxadiazininsektizide, Pyrazolinsektizide, Pyrethroidinsektizide wie Pyrethroidester-Insektizide oder Pyrethroidether-Insektizide oder Pyrethroidoxim-Insektizide, Tetramsäureinsektizide, Tetrahydrofurandioninsektizide, Thiazolinsektizide.

Besonders bevorzugt handelt es sich bei den Pestiziden um Triazolfungizide, Strobilurinfungizide, Neonicotinoidinsektizide, Organophosphatinsektizide, Pyrethroid-Insektizide, Phenoxyessigsäureherbizide, Isoxazolidinon-Herbizide, Cyclohexenoxim-Herbizide oder Sulfonylharnstoff-Herbizide.

Insbesondere bevorzugt handelt es sich bei den Pestiziden um Tebuconazol, Propiconazol, Epoxiconazol, Prothioconazol, Cyproconazol, Azoxystrobin, Trifloxystrobin, Imidacloprid, Thiacloprid, Chlorpyrifos, Chlorpyrifos-methyl, isomere Cypermethrine, isomere Cyhalothrine, 2,4-D-Ester, Clomazon, Clethodim, Nicosulfuron, lodosulfuron und Mesosulfuron.

Das eine oder die mehreren Copolymere der Komponente A) können in den erfindungsgemäßen Pestizid-Zusammensetzungen mehrere Zwecke erfüllen. Aufgrund ihrer chemischen Struktur können sie vor allem als Emulgator, Netz- oder Dispergiermittel wirken. Letzteres ist vor allem für Öldispersionen von Relevanz.

Das eine oder die mehreren Copolymere der Komponente A) können auch zur Erhöhung der biologischen Wirksamkeit des Pestizids beitragen, also als Adjuvant fungieren. Unter einem Adjuvant versteht man Hilfsstoffe, die die biologische Wirksamkeit der Wirkstoffe erhöhen, ohne selbst eine biologische Wirkung zu zeigen, indem sie beispielsweise die Benetzung, die Retention oder die Aufnahme in die Pflanze oder den Zielorganismus verbessern.

Die erfindungsgemäßen Pestizid-Zusammensetzungen können gegebenenfalls weitere Hilfsstoffe wie Verdickungsmittel, Dispergiermittel, Netzmittel, Emulgatoren, Konservierungsmittel, Adjuvants, Penetrationsförderer, Kältestabilisatoren, Farbmittel, Entschäumer und Antioxidantien enthalten.

Als Verdickungsmittel können alle üblicherweise für diesen Zweck in agrochemischen Formulierungen einsetzbaren Substanzen wie Xanthan gum, Cellulose, beispielsweise Carboxy-, Methyl-, Ethyl- oder Propylcellulose, (gegebenenfalls modifizierte) Bentonite, (gegebenenfalls oberflächenmodifiziertes) Siliziumdioxid eingesetzt werden.

Als zusätzliche Lösemittel eignen sich alle üblicherweise für diesen Zweck in agrochemischen Formulierungen einsetzbaren Substanzen, dabei kann es sich auch um mit Wasser mischbare Lösemittel handeln, solange sie wasserfrei sind. Beispiele für Lösemittel sind Alkane, aromatische Kohlenwasserstoffe, Solvent Naphtha, Alkohole, Ester, Ketone wie Cyclohexanon, Acetophenon, Amide wie Octan-, Decan- und Dodecansäuredimethylamid, Milchsäuredimethylamid, Ether, Phosphorsäureester wie Tris(ethylhexyl)phosphat, Phosphonsäureester wie Ethylhexylphosphonsäure-bis(ethylhexyl)ester, pflanzliche Öle, Mineralöle, Alkylester von Fettsäuren pflanzlichen oder tierischen Ursprungs, Pyrrolidone wie N-Methyl und N-Ethylpyrrolidon, Butyrolacton, Milchsäureester wie Ethyllactat, Ethylhexyllactat, Ester der Kohlensäure wie Propylencarbonat, Glykole oder Polyglykole.

Als Dispergiermittel und Netzmittel eignen sich alle üblicherweise für diesen Zweck in agrochemischen Formulierungen einsetzbaren Substanzen, wie nichtionische, amphotere, kationische und anionische (polymere) Tenside.

Bevorzugt als Dispergiermittel und Netzmittel sind Fettalkoholethoxylate, Fettalkoholalkoxylate, EO/PO-Blockcopolymere (EO: Ethylenoxy-Einheit; PO: Propylenoxy-Einheit), Alkylarylsufonsäuren, Alkylsulfonsäuren, Sulfonsäuren ethoxylierter Alkohole, Sulfosuccinate, Fettsäuremethyltauride, Tristyrylphenolethoxylate und -alkoxylate, Tri-sec-butylphenolethoxylate, Sulfatierte Cresol-Formaldehyd Kondensationsprodukte, sulfatierte Kondensationsprodukte von Naphthalin und Alkylnaphthalinen, Ligninsulfonate, Phosphorsäureester von ethoxylierten Fettalkoholen, Tristyrylphenolen und Tri-sec-butylphenolen sowie Ethersulfate von ethoxylierten Fettalkoholen, Tristyrylphenolen und Tri-sec-butylphenolen und polymere Dispergiermittel.

Als Emulgatoren eignen sich nicht-ionische und anionische Emulgatoren wie Ethoxylate oder Alkoxylate von langkettigen (C₈ bis C₂₄) linearen oder verzweigten Alkoholen, EO/PO-Blockcopolymere (EO: Ethylenoxy-Einheit; PO: Propylenoxy-Einheit), Alkylphenol- oder Tristyrylphenolethoxylate und -alkoxylate, Tri-sec-butylphenolethoxylate, Rizinusölethoxylate, Ester von langkettigen Carbonsäuren mit ein- oder mehrwertigen Alkoholen sowie deren Ethoxylierungsprodukte, Salze der Dodecylbenzolsulfonsäure, Sulfosuccinate, Phosphorsäureester von ethoxylierten Fettalkoholen, Tristyrylphenolen und Tri-sec-butylphenolen und deren Salze.

Als Konservierungsmittel können alle üblicherweise für diesen Zweck in agrochemischen Formulierungen einsetzbaren Substanzen wie organische Säuren und ihre Ester, beispielsweise Ascorbinsäure, Ascorbinpalmitat, Sorbat, Benzoesäure, Methyl- und Propyl-4-hydroxybenzoat, Propionate, Phenol, beispielsweise 2-Phenylphenat, 1,2-Benzisothiazolin-3-on, Formaldehyd, eingesetzt werden.

Als Adjuvants können alle üblicherweise für diesen Zweck in agrochemischen Formulierungen einsetzbaren Substanzen wie Alkoholalkoxylate, Fettaminethoxylate, Ester der phosphorigen Säure oder der Phosphorsäure wie Ethylhexylphosphonsäure-bis(ethylhexyl)ester oder Tris(ethylhexyl)phosphat, Sorbitan- und Sorbitolethoxylatderivate eingesetzt werden.

Als Penetrationsförderer eignen sich alle Substanzen, die üblicherweise eingesetzt werden, um das Eindringen von Pestiziden in Pflanzen oder in Zielorganismen zu verbessern. Penetrationsförderer können beispielsweise dadurch definiert werden, dass sie aus der wässrigen Spritzbrühe und/oder aus einem Spritzbelag auf der Pflanzenoberfläche in die Kutikula der Pflanze eindringen und dadurch die Stoffbeweglichkeit (Mobilität) von Wirkstoffen in der Kutikula erhöhen können. Die in der Literatur beschriebene Methode kann zur Bestimmung dieser Eigenschaft eingesetzt werden (Baur et al., 1997, Pesticide Science 51, 131-152).

Als Kältestabilisatoren können alle üblicherweise für diesen Zweck in agrochemischen Formulierungen einsetzbaren Stoffe fungieren. Beispielhaft seien Harnstoff, Glycerin und Propylenglykol genannt.

Geeignete Farbmittel sind alle üblicherweise für diesen Zweck in agrochemischen Formulierungen einsetzbaren Substanzen wie öllösliche Farbstoffe, sowie organische oder anorganische Pigmente.

Als Entschäumer eignen sich alle üblicherweise für diesen Zweck in agrochemischen Formulierungen einsetzbaren Substanzen, wie Fettsäurealkylesteralkoxylate; Organopolysiloxane wie Polydimethylsiloxane und deren Gemische mit mikrofeiner, gegebenenfalls silanierter Kieselsäure; Perfluoralkylphosphonate und -phosphinate; Paraffine; Wachse und Mikrokristallinwachse und deren Gemische mit silanierter Kieselsäure. Vorteilhaft sind auch Gemische verschiedener Schauminhibitoren, beispielsweise solche aus Silikonöl, Paraffinöl und/oder oder Wachsen.

Als Antioxidantien kommen alle üblicherweise für diesen Zweck in agrochemischen Formulierungen einsetzbaren Substanzen in Betracht, wie beispielsweise BHT (2,6-Di-tert.-butyl-4-methylphenol).

Der Anteil des einen oder der mehreren Copolymere der Komponente A) in den erfindungsgemäßen Pestizid-Zusammensetzungen beträgt vorzugsweise 0,1 bis 40 Gew.-%, besonders bevorzugt 0,5 bis 30 Gew.-% und insbesondere bevorzugt 1 bis 20 Gew.-%. Diese Mengenangaben sind auf das Gesamtgewicht der erfindungsgemäßen Pestizid-Zusammensetzungen bezogen.

Weiterhin beträgt der Anteil des einen oder der mehreren Pestizide in den erfindungsgemäßen Pestizid-Zusammensetzungen vorzugsweise 0,1 bis 75 Gew.-%, besonders bevorzugt 5 bis 50 Gew.-% und insbesondere bevorzugt 10 bis 40 Gew.-%. Diese Mengenangaben sind auf das Gesamtgewicht der erfindungsgemäßen Pestizid-Zusammensetzungen bezogen.

In den soeben genannten erfindungsgemäßen Pestizid-Zusammensetzungen beträgt der Anteil des einen oder der mehreren nicht mit Wasser mischbaren Lösemittel der Komponente B) vorzugsweise 1 bis 99,8 Gew.-%, besonders bevorzugt 5 bis 80 Gew-% und insbesondere bevorzugt 10 bis 70 Gew.-%. Diese Mengenangaben sind auf das Gesamtgewicht der erfindungsgemäßen Pestizid-Zusammensetzungen bezogen.

Die erfindungsgemäßen Pestizid-Zusammensetzungen werden vorzugsweise in Form von Spritzbrühen auf die Felder ausgebracht. Dabei wird eine Spritzbrühe z. B. durch Verdünnung einer Konzentrat-Formulierung wie beispielsweise eines erfindungsgemäßen Emulsionskonzentrats oder einer erfindungsgemäßen Öldispersion mit einer definierten Menge Wasser hergestellt.

Die erfindungsgemäßen Zusammensetzungen können auch als Tank-mix Adjuvant verwendet werden. Bei einem Tank-mix Adjuvant handelt es sich um ein Hilfsmittel, das kein Pestizid enthält, aber mit einem oder mehreren Pestiziden und gegebenenfalls weiteren Zusatzstoffen, wie beispielsweise Dünger, vor der Applikation des Pestizids zu einer Spritzbrühe verarbeitet wird und zu einer Erhöhung der biologischen Aktivität des Pestizids führt. Eine Übersicht über die gebräuchlichsten Typen der Tank-mix Adjuvants findet sich im "Compendium of Herbicide Adjuvants" von Bryan G. Young, 10th Edition, 2010.

Ob sich die Copolymer-Zusammensetzung auch unter praktischen Gesichtspunkten direkt als Tank-mix Adjuvant eignet, hängt von der Struktur des Copolymers, der Art des Lösemittels und dem Anteil des Copoylmers bzw. des nicht mit Wasser mischbaren Lösemittels in der Zusammensetzung ab. Aufgrund der oberflächenaktiven Eigenschaften der Copolymere sind diese in der Lage, sofern in ausreichendem Anteil enthalten, das Lösemittel in einer wässrigen Spritzbrühe zu emulgieren und damit eine homogene Mischung zu erzielen.

Besser eignen sich die erfindungsgemäßen Zusammensetzungen jedoch als Tank-mix Adjuvant, wenn sie zusätzlich eine oder mehrere oberflächenaktive Substanzen enthalten.

Beispielsweise in diesem Zusammenhang können die erfindungsgemäßen Zusammensetzungen auch zur Herstellung von wasserfreien Zusammensetzungen enthaltend eine oder mehrere oberflächenaktive Substanzen verwendet werden. Hierbei resultieren erfindungsgemäße Zusammensetzungen, die eine oder mehrere oberflächenaktive Substanzen enthalten.

In einer bevorzugten Ausführungsform der Erfindung enthalten die erfindungsgemäßen Zusammensetzungen daher zusätzlich ein oder mehrere oberflächenaktive Substanzen. Derartige erfindungsgemäße Zusammensetzungen werden im Folgenden auch als "erfindungsgemäße Adjuvant-Zusammensetzungen" bezeichnet.

Die oberflächenaktiven Substanzen dienen dazu, die erfindungsgemäßen Adjuvant-Zusammensetzungen beim Verdünnen mit Wasser in eine Emulsion zu überführen, in der das Copolymer und das Lösemittel homogen verteilt sind.

Besonders geeignete oberflächenaktive Substanzen sind Ethoxylate oder Alkoxylate von langkettigen (C₈ bis C₂₄) linearen oder verzweigten Alkoholen, EO/PO-Blockcopolymere (EO: Ethylenoxy-Einheit; PO: Propylenoxy-Einheit), Alkylphenol- oder Tristyrylphenolethoxylate und -alkoxylate, Tri-sec-butylphenolethoxylate, Rizinusölethoxylate, Ester von langkettigen Carbonsäuren mit ein- oder mehrwertigen Alkoholen sowie deren Ethoxylierungsprodukte, Salze der Dodecylbenzolsulfonsäure, Sulfosuccinate, Phosphorsäureester von ethoxylierten Fettalkoholen, Tristyrylphenolen und Tri-sec-butylphenolen und deren Salze.

Eine solche erfindungsgemäße Adjuvant-Zusammensetzung kann auch als Crop Oil Concentrate bezeichnet werden. Ein Crop Oil Concentrate (COC) ist eine besondere Form eines Tank-mix Adjuvants, üblicherweise bestehend aus einem Mineral- oder Pflanzenöl bzw. einem Fettsäuremethyl- oder Ethylester sowie einem oder mehreren Emulgatoren oder Netzmitteln. Andere gebräuchliche Namen für Crop Oil Concentrate sind Crop Oil, High Surfactant Oil Concentrate oder Vegetable Oil Concentrate bzw. Methylated oder Ethylated Vegetable Oil.

In den erfindungsgemäßen Adjuvant-Zusammensetzungen beträgt der Anteil des einen oder der mehreren Copolymere der Komponente A) vorzugsweise 1 bis 90 Gew.-%, besonders bevorzugt 2 bis 60 Gew.-% und insbesondere bevorzugt 5 bis 50 Gew.-%. Diese Mengenangaben sind auf das Gesamtgewicht der erfindungsgemäßen Adjuvant-Zusammensetzungen bezogen.

In den erfindungsgemäßen Adjuvant-Zusammensetzungen beträgt der Anteil der einen oder mehreren oberflächenaktiven Substanzen vorzugsweise 0,1 bis 50 Gew.-%, besonders bevorzugt 1 bis 30 Gew.-% und insbesondere bevorzugt 2 bis 20 Gew.-%. Diese Mengenangaben sind auf das Gesamtgewicht der erfindungsgemäßen Adjuvant-Zusammensetzungen bezogen.

In den soeben genannten erfindungsgemäßen Adjuvant-Zusammensetzungen beträgt der Anteil des einen oder der mehreren nicht mit Wasser mischbaren Lösemittel der Komponente B) vorzugsweise 1 bis 98,9 Gew.-%, besonders bevorzugt 20 bis 80 Gew-% und insbesondere bevorzugt 48 bis 90 Gew.-%. Diese Mengenangaben sind auf das Gesamtgewicht der erfindungsgemäßen Adjuvant-Zusammensetzungen bezogen.

Die erfindungsgemäßen Zusammensetzungen können auch zur Herstellung von wasserfreien Zusammensetzungen enthaltend ein oder mehrere Pestizide und gleichzeitig eine oder mehrere oberflächenaktive Substanzen verwendet werden. Hierbei resultieren erfindungsgemäße Zusammensetzungen, die ein oder mehrere Pestizide und eine oder mehrere oberflächenaktive Substanzen enthalten.

In einer weiteren bevorzugten Ausführungsform der Erfindung enthalten die erfindungsgemäßen Zusammensetzungen daher zusätzlich ein oder mehrere Pestizide und eine oder mehrere oberflächenaktive Substanzen. Derartige erfindungsgemäße Zusammensetzungen werden im Folgenden auch als "erfindungsgemäße oberflächenaktive Substanzen enthaltende Pestizidzusammensetzungen" bezeichnet.

In den erfindungsgemäßen oberflächenaktive Substanzen enthaltenden Pestizidzusammensetzungen beträgt
der Anteil des einen oder der mehreren Copolymere der Komponente A) vorzugsweise 0,1 bis 40 Gew.-%, besonders bevorzugt 0,5 bis 30 Gew-% und insbesondere bevorzugt 1 bis 20 Gew.-%,
der Anteil des einen oder der mehreren Pestizide vorzugsweise 0,1 bis 75 Gew.-%, besonders bevorzugt 5 bis 50 Gew.-% und insbesondere bevorzugt 10 bis 40 Gew.-% und
der Anteil der einen oder der mehreren oberflächenaktiven Substanzen vorzugsweise 0,1 bis 30 Gew.-%, besonders bevorzugt 0,5 bis 25 Gew-% und insbesondere bevorzugt 1 bis 20 Gew.-%. Diese Mengenangaben sind auf das Gesamtgewicht der erfindungsgemäßen oberflächenaktive Substanzen enthaltenden Pestizidzusammensetzungen bezogen.

In den soeben genannten erfindungsgemäßen oberflächenaktive Substanzen enthaltenden Pestizidzusammensetzungen beträgt der Anteil des einen oder der mehreren nicht mit Wasser mischbaren Lösemittel der Komponente B) vorzugsweise 1 bis 99,7 Gew.-%, besonders bevorzugt 5 bis 80 Gew-% und insbesondere bevorzugt 10 bis 70 Gew.-%. Diese Mengenangaben sind auf das Gesamtgewicht der erfindungsgemäßen oberflächenaktive Substanzen enthaltenden Pestizidzusammensetzungen bezogen.

Wie bereits erwähnt können die erfindungsgemäßen Zusammensetzungen beispielsweise zur Herstellung von erfindungsgemäßen Pestizid-Zusammensetzungen, zur Herstellung von erfindungsgemäßen Adjuvant-Zusammensetzungen oder zur Herstellung erfindungsgemäßer oberflächenaktive Substanzen enthaltenden Pestizidzusammensetzungen verwendet werden.

Weiterer Gegenstand der vorliegenden Erfindung ist daher die Verwendung einer erfindungsgemäßen Zusammensetzung zur Herstellung von erfindungsgemäßen Pestizid-Zusammensetzungen, zur Herstellung von erfindungsgemäßen Adjuvant-Zusammensetzungen oder zur Herstellung von erfindungsgemäßen oberflächenaktive Substanzen enthaltenden Pestizidzusammensetzungen.

Die erfindungsgemäßen Zusammensetzungen können auch zur Herstellung von wässrigen Emulsionen verwendet werden.

Weiterer Gegenstand der vorliegenden Erfindung ist daher die Verwendung einer erfindungsgemäßen Zusammensetzung zur Herstellung von wässrigen Emulsionen.

Die Herstellung der erfindungsgemäßen Pestizid-Zusammensetzungen ist je nach Formulierungstyp auf verschiedenen Wegen möglich, welche dem Fachmann hinlänglich bekannt sind. Auch die Herstellung der erfindungsgemäßen Adjuvant-Zusammensetzungen ist auf verschiedenen Wegen möglich, welche dem Fachmann hinlänglich bekannt sind. Gleiches gilt für die Herstellung der erfindungsgemäßen oberflächenaktive Substanzen enthaltenden Pestizidzusammensetzungen und für die Herstellung von wässrigen Emulsionen aus erfindungsgemäßen Zusammensetzungen.

### Beispiele

Im Folgenden wird die Erfindung anhand von Beispielen verdeutlicht.

Bei den eingesetzten Handelsprodukten handelt es sich um:

| | |
|---|---|
| Emulsogen^{®} TS 200 | Tristyrylphenolethoxylat (20 EO) der Firma Clariant |
| Emulsogen^{®} EP 4901 | butanolbasiertes EO/PO-Copolymer der Firma Clariant |
| Emulsogen^{®} 3510 | butanolbasiertes EO/PO-Copolymer der Firma Clariant |
| Emulsogen^{®} EL 360 | ethoxyliertes Castoröl (36 EO) der Firma Clariant |
| Emulsogen^{®} EL 400 | ethoxyliertes Castoröl (40 EO) der Firma Clariant |
| Genapol^{®} C 030 | ethoxylierter Cocosfettalkohol (3 EO) der Firma Clariant |
| Marcol^{®} 82 | Mineralöl der Firma Exxon |
| Phenylsulfonat CA | verzweigtes Ca-Dodecylbenzylsulfonat in iso-Butanol der Firma Clariant (70 Gew.-%ig) |
| Phenylsulfonat CAL | lineares Ca-Dodecylbenzylsulfonat in iso-Butanol der Firma Clariant (70 Gew.-%ig) |
| Solvesso^{®} 200 ND | aromatisches Kohlenwasserstoffgemisch der Firma Exxon (Solvent Naphtha) |
| Solvesso^{®} 150 | aromatisches Kohlenwasserstoffgemisch der Firma Exxon (Solvent Naphtha) |
| Synergen^{®} KN | Funigizid-Adjuvant der Firma Clariant (100 %ig) |

### Herstellungsbeispiele

Allgemeine Vorschrift zur Herstellung der Copolymere 1 bis 12:
Die Herstellung der Copolymere erfolgt in zwei Schritten, wobei im ersten Schritt Glycerin zum entsprechenden Polyglycerin kondensiert wird, das anschließend mit Monocarbonsäure und Dicarbonsäure zum Copolymer umgesetzt wird.

Herstellung von Polyglycerin (n = 9,7): 2000 g Glycerin und 6,0 g NaOH (50 Gew.-% in Wasser) wurden in einer Rührapparatur mit Stickstoffeinleitung und Wasserauskreiser unter Rühren auf 270 °C erhitzt. Nach 9 Stunden Reaktionszeit und einem Austrag von 444 g Wasser wurde eine Probe genommen und die OH-Zahl bestimmt. Die ermittelte OH-Zahl betrug 891 mg KOH/g. Dies entspricht einem mittleren Kondensationsgrad n von 9,7 Glycerineinheiten.

Herstellung von Polyglycerin (n = 5,0): 2000 g Glycerin und 6,0 g NaOH (50 Gew.-% in Wasser) wurden in einer Rührapparatur mit Stickstoffeinleitung und Wasserauskreiser unter Rühren auf 270 °C erhitzt. Nach 4 Stunden Reaktionszeit und einem Austrag von 226 g Wasser wurde eine Probe genommen und die OH-Zahl bestimmt. Die ermittelte OH-Zahl betrug 1009 mg KOH/g. Dies entspricht einem mittleren Kondensationsgrad n von 5,0 Glycerineinheiten.

Zur Bestimmung der OH-Zahl wird die in DIN 53240 beschriebene Methode verwendet.

Kondensation von Polyglycerin mit Mono- und Dicarbonsäure zum Copolymer:
Das Polyglycerin wurde in einen Rührbehälter mit N₂-Durchleitung und Wasserauskreiser gegeben und mit Kokosfettsäure (C_{8/18}) und Phthalsäure versetzt. Anschließend wurde die Reaktionsmischung unter Rühren auf 220 °C erhitzt bis das Copolymer eine Säurezahl von < 1,00 mg KOH/g aufweist (drei bis neun Stunden)
Zur Bestimmung der Säurezahl wird die in DIN EN ISO 2114 beschriebene Methode verwendet.

In Tabelle 1 sind die eingesetzten Absolutmengen für die Monomere zur Herstellung der Copolymere 1 - 12 sowie die Gewichts-prozentuale Zusammensetzung der Copolymere 1 - 7 (für erfindungsgemäße Zusammensetzungen) und der Copolymere 8 - 12 (für Vergleichszusammensetzungen) angegeben.

Die in Tabelle 1 genannten Gewichts-prozentualen Zusammensetzungen der Copolymere 1 - 12 beziehen sich auf die Gesamtmenge der Monomere wie sie zur Herstellung der Copolymere eingesetzt wurden. Sie beziehen sich nicht auf die Endzusammensetzung der Copolymere, die durch Abspaltung von bei der Kondensation freiwerdendem Wasser davon abweicht.

**Tabelle 1 Zusammensetzung der Copolymere**

| Copolymer | Glycerin | n | Phthalsäure | Kokosfettsäure | Anteil Glycerin | Anteil Phthalsäure | Anteil Kokosfettsäure |
|---|---|---|---|---|---|---|---|
| | [g] | | [g] | [g] | [Gew.-%] | [Gew.-%] | [Gew.-%] |
| 1 | 460 | 5,0 | 1,7 | 408 | 52,9 | 0,2 | 46,9 |
| 2 | 460 | 5,0 | 17 | 408 | 52,0 | 1,9 | 46,1 |
| 3 | 218 | 9,7 | 40,4 | 98,8 | 61,0 | 11,3 | 27,7 |
| 4 | 460 | 5,0 | 166 | 204 | 55,4 | 20,0 | 24,6 |
| 5 | 218 | 9,7 | 83 | 98,8 | 54,5 | 20,8 | 24,7 |
| 6 | 460 | 5,0 | 166 | 408 | 44,5 | 16,1 | 39,5 |
| 7 | 460 | 5,0 | 166 | 712 | 34,4 | 12,4 | 53,2 |
| 8 (Vgl.) | 218 | 9,7 | 10,1 | 24,7 | 86,2 | 4,0 | 9,8 |
| 9 (Vgl.) | 218 | 9,7 | 40,4 | 49,4 | 70,8 | 13,1 | 16,0 |
| 10 (Vgl.) | 218 | 9,7 | 40,4 | 74,1 | 65,6 | 12,2 | 22,3 |
| 11 (Vgl.) | 218 | 9,7 | 4 | 24,7 | 88,4 | 1,6 | 10,0 |
| 12 (Vgl.) | 218 | 5,0 | 40,4 | 24,7 | 77,0 | 14,3 | 8,7 |

| | | | | | | | |
|---|---|---|---|---|---|---|---|
| n: mittlerer Kondensationsgrad des Glycerins; Vgl.: Vergleich | | | | | | | |

Bestimmung der Löslichkeiten der Copolymere in nicht mit Wasser mischbaren Lösemitteln:
Je 5 g der Copolymere 1 bis 12 werden in einem Becherglas mit 95 g Rapsölmethylester bzw. Solvesso^{®} 200 ND versetzt und für 3 Stunden gerührt.

**Tabelle 2 Löslichkeit der Copolymere in unpolaren Lösungsmitteln**

| Copolymer | Rapsölmethylester | Solvesso^{®} 200 ND |
|---|---|---|
| 1 | Klar gelöst | Klar gelöst |
| 2 | Klar gelöst | Klar gelöst |
| 3 | Klar gelöst | Klar gelöst |
| 4 | Klar gelöst | Klar gelöst |
| 5 | Klar gelöst | Klar gelöst |
| 6 | Klar gelöst | Klar gelöst |
| 7 | Klar gelöst | Klar gelöst |
| 8 (Vgl.) | Unlöslich | Unlöslich |
| 9 (Vgl.) | Unlöslich | Unlöslich |
| 10 (Vgl.) | Unlöslich | Unlöslich |
| 11 (Vgl.) | Unlöslich | Unlöslich |
| 12 (Vgl.) | Unlöslich | Unlöslich |

| | | |
|---|---|---|
| Vgl.: Vergleich | | |

Die Ergebnisse zeigen, dass die Löslichkeit in den nicht mit Wasser mischbaren Lösemitteln entscheidend vom Anteil der Cocosfettsäure und nicht vom Anteil der Phthalsäure abhängt.

Herstellung der erfindungsgemäßen Copolymer-Zusammensetzungen

### Beispiel 1:

600 g von Copolymer 2 werden in 400 g Solvesso^{®} 200 ND unter Rühren eingetragen. Es entsteht eine klare, braune viskose Lösung.

### Beispiel 2:

600 g von Copolymer 2 werden in 400 g Rapsölmethylester unter Rühren eingetragen. Es entsteht eine klare, braune viskose Lösung.

### Beispiel 3:

700 g von Copolymer 2 werden in 300 g Solvesso^{®} 200 ND unter Rühren eingetragen. Es entsteht eine klare, braune viskose Lösung.

### Beispiel 4:

300 g von Copolymer 2 werden in 700 g Solvesso^{®} 200 ND unter Rühren eingetragen. Es entsteht eine klare, braune viskose Lösung.

### Beispiel 5:

600 g von Copolymer 5 werden in 400 g Rapsölmethylester unter Rühren eingetragen. Es entsteht eine klare, braune viskose Lösung.

### Beispiel 6:

600 g von Copolymer 5 werden in 400 g Solvesso^{®} 200 ND unter Rühren eingetragen. Es entsteht eine klare, braune viskose Lösung.

### Beispiel 7:

600 g von Copolymer 7 werden in 400 g Solvesso^{®} 200 ND unter Rühren eingetragen. Es entsteht eine klare, braune viskose Lösung.

### Beispiel 8:

600 g von Copolymer 7 werden in 400 g Solvesso^{®} 200 ND unter Rühren eingetragen. Es entsteht eine klare, braune viskose Lösung.

Alle Copolymer-Zusammensetzungen aus den Beispielen 1 bis 8 werden einem Lagertest unterzogen. Dabei werden die Lösungen für 14 Tage bei 54 °C und anschließend 7 Tage bei 0 °C gelagert. Alle Lösungen sind nach der Lagerung immer noch homogen und zeigen keine Anzeichen einer Trennung.

### Anwendungsbeispiele

Pestizid-Zusammensetzungen (Emulsionskonzentrate) werden aus den jeweils in den einzelnen Beispielen genannten Komponenten hergestellt.

### Anwendungsbeispiel 1: lamba-Cyhalothrin-EC

50,0 g lamba-Cyhalothrin
30,0 g Phenylsulfonat CAL
30,0 g Emulsogen^{®} EL 400
100,0 g einer 60 Gew-%igen Lösung von Copolymer 5 in Rapsölmethylester
695,0 g Rapsölmethylester

### Anwendungsbeispiel 2: Chlorpyrifos-EC

211,0 g Chlorpyrifos (97 Gew.-%)
50,0 g Phenylsulfonat CA
45,0 g Emulsogen^{®} EL 360
5,0 g Emulsogen^{®} 3510
80,0 g einer 60 Gew-%igen Lösung von Copolymer 2 in Solvesso^{®} 200 ND
609,0 g Solvesso^{®} 150

### Anwendungsbeispiel 3: Tebuconazol-EC

206,0 g Tebuconazol (97 Gew.-%)
60,0 g Emulsogen^{®} EP 4901
40,0 g Emulsogen^{®} TS 200
50,0 g einer 60 Gew-%igen Lösung von Copolymer 7 in Solvesso^{®} 200 ND
150,0 g Synergen^{®} KN
250,0 g Acetophenon
250,0 g 2-Ethylhexanol

### Anwendungsbeispiel 4: 2,4-D-Isooctylester-EC

632,0 g 2,4-D-Isooctylester (95 Gew.-%)
17,0 g Phenylsulfonat CA
24,0 g Emulsogen^{®} EL 360
50,0 g einer 60 Gew-%igen Lösung von Copolymer 2 in Solvesso^{®} 200 ND
277,0 g Solvesso^{®} 150

### Anwendungsbeispiel 5: Acetochlor-EC

262,0 g Acetochlor (94 Gew.-%)
120,0 g einer 60 Gew-%igen Lösung von Copolymer 7 in Solvesso^{®} 200 ND
164,0 g Solvesso^{®} 150

Alle Zusammensetzungen der Anwendungsbeispiele 1 bis 5 ergeben lagerstabile EC-Formulierungen, die nach 14 Tagen Lagerung bei 54 °C und anschließend 7 Tagen Lagerung bei 0 °C keine Anzeichen von Trennung oder Ausfällung zeigen. Zur Beurteilung der Qualität der Formulierungen werden 5 Gew.-%ige wässrige Emulsionen in weichem (20 ppm) und hartem (342 ppm) CIPAC-Standard Wasser hergestellt und bei 30 °C nach einem Zeitraum von 2, 4 und 24 Stunden beurteilt. Alle Emulsionen sind über diesen Zeitraum stabil, eine Phasentrennung wird nicht beobachtet.

### Anwendungsbeispiel 6: Adjuvant-Zusammensetzung (Crop Oil Concentrate)

Ein Crop Oil Concentrate wird aus folgenden Komponenten hergestellt:
138,0 g Genapol^{®} C 030
15,0 g Phenylsulfonat CAL
200,0 g einer 60 Gew-%igen Lösung von Copolymer 5 in Solvesso^{®} 200 ND
647,0 g Marcol^{®} 82

Die Zusammensetzung des Anwendungsbeispiels 6 ergibt ein lagerstabiles Crop Oil Concentrate, das nach 14 Tagen Lagerung bei 54 °C und anschließend 7 Tagen Lagerung bei 0 °C kein Anzeichen von Trennung oder Ausfällung zeigt. Zur Beurteilung der Qualität werden 5 Gew.-%ige wässrige Emulsionen in weichem (20 ppm) und hartem (342 ppm) CIPAC-Standard Wasser hergestellt und bei 30 °C nach einem Zeitraum von 2, 4 und 24 Stunden beurteilt. Die Emulsion ist über diesen Zeitraum stabil, eine Phasentrennung wird nicht beobachtet.

## Patentansprüche

1. Zusammensetzung enthaltend
A) ein oder mehrere Copolymere, wobei die Copolymere eine oder mehrere Struktureinheiten hervorgegangen aus
a) 19,9 bis 75,9 Gew.-% Glycerin
b) 0,1 bis 30 Gew.-% Phthalsäure und
c) 24 bis 80 Gew.-% Cocosfettsäure
enthalten und derart hergestellt werden, dass Monoglycerin zunächst zu einem Oligo- oder Polyglycerin kondensiert wird und erst danach mit der Phthalsäure und der Cocosfettsäure umgesetzt wird
und
B) ein oder mehrere nicht mit Wasser mischbare Lösemittel,
**dadurch gekennzeichnet, dass** die Zusammensetzung entweder kein Wasser enthält oder Wasser in einer Menge kleiner oder gleich 1,0 Gew.-% enthält, bezogen auf das Gesamtgewicht der Zusammensetzung.

2. Zusammensetzung gemäß Anspruch 1, **dadurch gekennzeichnet, dass** es sich bei dem einen oder den mehreren nicht mit Wasser mischbaren Lösemitteln um Solvent Naphtha, Fettsäuredimethylamide, pflanzliche Öle, Mineralöle oder Methylester von Fettsäuren pflanzlichen oder tierischen Ursprungs handelt.

3. Zusammensetzung gemäß Anspruch 1 oder 2, **dadurch gekennzeichnet, dass**
der Anteil des einen oder der mehreren Copolymere der Komponente A) 1 bis 90 Gew.-% beträgt und
der Anteil des einen oder der mehreren nicht mit Wasser mischbaren Lösemittel der Komponente B) 10 bis 99 Gew.-% beträgt.

4. Zusammensetzung gemäß Anspruch 1 oder 2, **dadurch gekennzeichnet, dass** sie zusätzlich ein oder mehrere Pestizide enthält.

5. Zusammensetzung gemäß Anspruch 4, **dadurch gekennzeichnet, dass** es sich um ein Emulsionskonzentrat oder eine Öldispersion handelt.

6. Zusammensetzung gemäß Anspruch 4 oder 5, **dadurch gekennzeichnet, dass**
der Anteil des einen oder der mehreren Copolymere der Komponente A) 0,1 bis 40 Gew.-% beträgt und
der Anteil des einen oder der mehreren Pestizide 0,1 bis 75 Gew.-% beträgt.

7. Zusammensetzung gemäß Anspruch 6, **dadurch gekennzeichnet, dass** der Anteil des einen oder der mehreren nicht mit Wasser mischbaren Lösemittel der Komponente B) 1 bis 99,8 Gew.% beträgt.

8. Zusammensetzung gemäß Anspruch 1 oder 2, **dadurch gekennzeichnet, dass** sie zusätzlich eine oder mehrere oberflächenaktive Substanzen enthält.

9. Zusammensetzung gemäß Anspruch 8, **dadurch gekennzeichnet, dass** der Anteil des einen oder der mehreren Copolymere der Komponente A) 1 bis 90 Gew.-% beträgt und
der Anteil der einen oder der mehreren oberflächenaktiven Substanzen 0,1 bis 50 Gew.-% beträgt.

10. Zusammensetzung nach Anspruch 9, **dadurch gekennzeichnet, dass** der Anteil des einen oder der mehreren nicht mit Wasser mischbaren Lösemittel der Komponente B) 1 bis 98,9 Gew.% beträgt.

11. Zusammensetzung gemäß Anspruch 1 oder 2, **dadurch gekennzeichnet, dass** sie zusätzlich ein oder mehrere Pestizide und eine oder mehrere oberflächenaktive Substanzen enthält.

12. Zusammensetzung nach Anspruch 11, **dadurch gekennzeichnet, dass** der Anteil
des einen oder der mehreren Copolymere der Komponente A) 0,1 bis 40 Gew.-% beträgt,
der Anteil des einen oder der mehreren Pestizide 0,1 bis 75 Gew.-% beträgt und der Anteil der einen oder der mehreren oberflächenaktiven Substanzen 0,1 bis 30 Gew.-% beträgt.

13. Zusammensetzung nach Anspruch 12, **dadurch gekennzeichnet, dass** der Anteil des einen oder der mehreren nicht mit Wasser mischbaren Lösemittel der Komponente B) 1 bis 99,7 Gew.-% beträgt.

14. Verwendung einer Zusammensetzung gemäß einem oder mehreren der Ansprüche 1 bis 13 zur Herstellung einer wässrigen Emulsion.

## Claims

1. A composition comprising
A) one or more copolymers, where the copolymers contain one or more structural units derived from
a) 19.9 to 75.9% by weight of glycerol
b) 0.1 to 30% by weight of phthalic acid and
c) 24 to 80% by weight of coconut fatty acid
and are prepared by firstly condensing monoglycerol to give an oligo- or polyglycerol and only then reacting it with the phthalic acid and the coconut fatty acid
and
B) one or more water-immiscible solvents,
wherein the composition either comprises no water or comprises water in an amount of less than or equal to 1.0% by weight, based on the total weight of the composition.

2. The composition as claimed in claim 1, wherein the one or more water-immiscible solvents are solvent naphtha, fatty acid dimethylamides, vegetable oils, mineral oils or methyl esters of fatty acids of vegetable or animal origin.

3. The composition as claimed in claim 1 or 2,
wherein
the fraction of the one or more copolymers of component A) is 1 to 90% by weight and
the fraction of the one or more water-immiscible solvents of component B) is 10 to 99% by weight.

4. The composition as claimed in claim 1 or 2, wherein it additionally comprises one or more pesticides.

5. The composition as claimed in claim 4, wherein it is an emulsion concentrate or an oil dispersion.

6. The composition as claimed in claim 4 or 5,
wherein
the fraction of the one or more copolymers of component A) is 0.1 to 40% by weight and
the fraction of the one or more pesticides is 0.1 to 75% by weight.

7. The composition as claimed in claim 6, wherein the fraction of the one or more water-immiscible solvents of component B) is 1 to 99.8% by weight.

8. The composition as claimed in claim 1 or 2, wherein it additionally comprises one or more surface-active substances.

9. The composition as claimed in claim 8, wherein
the fraction of the one or more copolymers of component A) is 1 to 90% by weight and
the fraction of the one or more surface-active substances is 0.1 to 50% by weight.

10. The composition as claimed in claim 9, wherein the fraction of the one or more water-immiscible solvents of component B) is 1 to 98.9% by weight.

11. The composition as claimed in claim 1 or 2, wherein it additionally comprises one or more pesticides and one or more surface-active substances.

12. The composition as claimed in claim 11, wherein the fraction
of the one or more copolymers of component A) is 0.1 to 40% by weight,
the fraction of the one or more pesticides is 0.1 to 75% by weight and
the fraction of the one or more surface-active substances is 0.1 to 30% by weight.

13. The composition as claimed in claim 12, wherein the fraction of the one or more water-immiscible solvents of component B) is 1 to 99.7% by weight.

14. The use of a composition as claimed in one or more of claims 1 to 13 for producing an aqueous emulsion.

## Revendications

1. Composition contenant
A) un ou plusieurs copolymères, les copolymères contenant une ou plusieurs unités structurales provenant de
a) 19,9 à 75,9% en poids de glycérol
b) 0,1 à 30% en poids d'acide phtalique et
c) 24 à 80% en poids d'acide gras de coco
et étant préparés en ce que le monoglycérol est d'abord condensé en un oligoglycérol ou un polyglycérol et seulement transformé ensuite avec l'acide phtalique et l'acide gras de coco et
B) un ou plusieurs solvants non miscibles à l'eau,
**caractérisé en ce que** la composition, soit ne contient pas d'eau, soit contient de l'eau en une quantité inférieure ou égale à 1,0% en poids, par rapport au poids total de la composition.

2. Composition selon la revendication 1, **caractérisée en ce qu'**il s'agit, pour ledit un ou lesdits plusieurs solvants non miscibles à l'eau, de solvant naphta, de diméthylamides d'acide gras, d'huiles végétales, d'huiles minérales ou d'esters méthyliques d'acides gras d'origine végétale ou animale.

3. Composition selon la revendication 1 ou 2, **caractérisée en ce que** la proportion dudit un ou desdits plusieurs copolymères du composant A) représente 1 à 90% en poids et la proportion dudit un ou desdits plusieurs solvants non miscibles à l'eau du composant B) représente 10 à 99% en poids.

4. Composition selon la revendication 1 ou 2, **caractérisée en ce qu'**elle contient en plus un ou plusieurs pesticides.

5. Composition selon la revendication 4, **caractérisée en ce qu'**il s'agit d'une émulsion concentrée ou d'une dispersion huileuse.

6. Composition selon la revendication 4 ou 5, **caractérisée en ce que** la proportion dudit un ou desdits plusieurs copolymères du composant A) représente 0,1 à 40% en poids et la proportion dudit un ou desdits plusieurs pesticides représente 0,1 à 75% en poids.

7. Composition selon la revendication 6, **caractérisée en ce que** la proportion dudit un ou desdits plusieurs solvants non miscibles à l'eau du composant B) représente 1 à 99,8% en poids.

8. Composition selon la revendication 1 ou 2, **caractérisée en ce qu'**elle contient en outre une ou plusieurs substances tensioactives.

9. Composition selon la revendication 8, **caractérisée en ce que** la proportion dudit un ou desdits plusieurs copolymères du composant A) représente 1 à 90% en poids et la proportion de ladite une ou desdites plusieurs substances tensioactives représente 0,1 à 50% en poids.

10. Composition selon la revendication 9, **caractérisée en ce que** la proportion dudit un ou desdits plusieurs solvants non miscibles à l'eau du composant B) représente 1 à 98,9% en poids.

11. Composition selon la revendication 1 ou 2, **caractérisée en ce qu'**elle contient en plus un ou plusieurs pesticides et une ou plusieurs substances tensioactives.

12. Composition selon la revendication 11, **caractérisée en ce que** la proportion dudit un ou desdits plusieurs copolymères du composant A) représente 0,1 à 40% en poids, la proportion dudit un ou desdits plusieurs pesticides représentent 0,1 à 75% en poids et la proportion de ladite une ou desdites plusieurs substances tensioactives représente 0,1 à 30% en poids.

13. Composition selon la revendication 12, **caractérisée en ce que** la proportion dudit un ou desdits plusieurs solvants non miscibles à l'eau du composant B) représente 1 à 99,7% en poids.

14. Utilisation d'une composition selon l'une ou plusieurs des revendications 1 à 13 pour la préparation d'une émulsion aqueuse.
